# EUROPÄISCHE PATENTANMELDUNG

(11) **EP 4 714 763 A1**
(43) Veröffentlichungstag der Anmeldung: **25.03.2026**
(21) Anmeldenummer: 25195744.5
(22) Anmeldetag: 13.08.2025
(51) Int. Cl.: B60T 13/74, F16D 65/00

(54) **ELEKTROMECHANISCHER BREMSAKTUATOR, ELEKTROMECHANISCHES BREMSSYSTEM, FAHRZEUG UND VERFAHREN**

(30) Priorität: 19.09.2024 DE 102024126868
(71) Anmelder: ZF CV Systems Global GmbH, 3006 Bern (CH)
(72) Erfinder: VAN THIEL, Julian, 30938 Grossburgwedel (DE); DIECKMANN, Thomas, 30982 Pattensen (DE); PYTTLIK, Daniel, 31559 Hohnhorst (DE); RABE, Dirk-Heinrich, 31535 Neustadt (DE)
(74) Vertreter: Von Ahsen, Nils Thomas

(57) **Zusammenfassung**

Die Erfindung betrifft einen elektromechanischer Bremsaktuator (16) für ein Fahrzeug (10). Der elektromechanische Bremsaktuator (16) umfasst eine Bremsbetätigungseinrichtung (18) zum Betätigen (20) einer Bremse (14). Die Bremsbetätigungseinrichtung (18) umfasst ein Betätigungselement (22) zum Beaufschlagen (24) der Bremse (14) und einen Elektromotor (26) zum Antreiben (28) des Betätigungselements (22). Der elektromechanische Bremsaktuator (16) umfasst eine elektronische Steuerungseinrichtung (30). Die elektronische Steuerungseinrichtung (30) ist dazu eingerichtet, die Bremsbetätigungseinrichtung (18) zu steuern. Der elektromechanische Bremsaktuator (16) umfasst eine Bremsstaub-Sammeleinrichtung (32) zumindest teilweise.

## Beschreibung

Die Erfindung betrifft einen elektromechanischen Bremsaktuator für ein Fahrzeug, ein elektromechanisches Bremssystem, ein Fahrzeug und ein Verfahren zum Sammeln von Bremsstaub in einem Fahrzeug.

Elektromechanische Bremsaktuatoren finden in der Fahrzeugtechnik immer weitere Verbreitung. Sie haben unter anderem den Vorteil, dass im Vergleich zu hydraulischen oder pneumatischen Bremsaktuatoren keine Fluidleitungen zwischen den Bremsaktuatoren und einer zentralen Steuerungseinheit nötig sind.

In elektromechanischen Bremssystemen mit elektromechanischen Bremsaktuatoren werden typischerweise herkömmlich Reibbremsen, etwa als Scheibenbremsen oder Trommelbremsen ausgeführt, eingesetzt. Bei jedem Bremsvorgang einer Reibbremse entsteht Bremsstaub durch Abnutzung und hohe Temperaturen, die beim Bremsen auftreten. Der entstandene Bremsstaub enthält Feinstaub mit geringer Partikelgröße und kann zudem durch seinen typischerweise hohen metallischen Anteil gesundheitsschädlich und umweltbelastend sein. Je nach Größe können die Feinstaubpartikel unterschiedlich weit in Atemwege von Menschen vordringen und potenziell verschiedene Atemwegs- und Herz-Kreislauf-Erkrankungen auslösen.

Die Reduktion von Feinstaubemissionen im Straßenverkehr, welche innerhalb des Motors durch Vorgänge, wie Verbrennung, erzeugt werden, haben bereits politische Aufmerksamkeit erhalten. So gibt es zum Beispiel gesetzliche Abgasgrenzwerte, die bewirkt haben, dass Feinstaubemissionen ausgehend vom Motor reduziert wurden, etwa durch Filter oder andere Maßnahmen. Die geplante Euro-7-Gesetzgebung befasst sich außerdem mit Abrieb von Bremsen.

Zur Verringerung der Feinstaubemissionen aus Reibbremsen gibt es unterschiedliche Lösungsansätze. Neben chemischen und mechanischen Verbesserungen der aneinanderreibenden Flächen ist es auch bekannt, den entstandenen Bremsstaub mit einer zusätzlichen Vorrichtung am Fahrzeug einzusammeln. Dies ist allerdings technisch aufwendig und erfordert viel Bauraum.

Es ist eine Aufgabe der Erfindung, in einem Fahrzeug eine Reduktion von Bremsstaubemissionen mit einer einfachen, aber kompakten Konstruktion zu ermöglichen.

Die Aufgabe wird gelöst durch einen elektromechanischen Bremsaktuator nach Anspruch 1 für ein Fahrzeug.

Der elektromechanische Bremsaktuator umfasst eine Bremsbetätigungseinrichtung zum Betätigen einer Bremse. Die Bremsbetätigungseinrichtung umfasst ein Betätigungselement zum Beaufschlagen der Bremse und einen Elektromotor zum Antreiben des Betätigungselements.

Der elektromechanische Bremsaktuator umfasst eine elektronische Steuerungseinrichtung, welche dazu eingerichtet ist, die Bremsbetätigungseinrichtung zu steuern.

Der elektromechanische Bremsaktuator umfasst eine Bremsstaub-Sammeleinrichtung zumindest teilweise.

Durch eine derartige Konstruktion werden zumindest Anteile der Bremsstaub-Sammeleinrichtung zur Reduktion von Bremsstaubemissionen besonders vorteilhaft in einen elektromechanischen Bremsaktuator integriert. Hieraus resultiert ein einfacher, aber kompakter Aufbau. Durch mögliche gemeinsame Anteile von Funktionen und/oder von Hardwareelementen des elektromagnetischen Bremsaktuators einerseits und der Bremsstaub-Sammeleinrichtung andererseits können Kosten und Bauraum sowie Installations- und Wartungsaufwand vorteilhaft reduziert werden.

Besonders bevorzugt können gemeinsame Anteile sowohl für die Kernfunktion des elektromechanischen Bremsaktuators, insbesondere Zuspann- und Bremsmomentregelung, als auch für die Ansteuerung oder Bauform, etwa für das Gehäuse, der Bremsstaub-Sammeleinrichtung verwendet werden. Im Rahmen der Erfindung kann im Hinblick auf Bauraum, Kosten sowie Installations- und Wartungsaufwand eine besonders vorteilhafte Umsetzung realisiert werden.

Die Anteile der Bremsstaub-Sammeleinrichtung, welche vom elektromechanischen Bremsaktuator umfasst sind, können Softwareanteile oder Hardwareanteile sowie eine Kombination aus beiden umfassen.

Gemäß einer Ausführungsform ist die elektronische Steuerungseinrichtung dazu eingerichtet, die Bremsstaub-Sammeleinrichtung zu steuern. Durch eine derartige Funktionsintegration können weitere Bauteile, wie etwa eine zusätzliche Steuerungseinrichtung vorteilhaft eingespart werden. Zudem lassen sich auch Softwarekomponenten gemeinsam für die Steuerung der Bremsbetätigungseinrichtung und der Bremsstaub-Sammeleinrichtung einsetzen, was eine weitere Kosteneinsparung bewirkt.

Die elektronische Steuerungseinrichtung kann beispielsweise einen Mikrocontroller aufweisen, der dazu eingerichtet ist, sowohl die Bremsbetätigungseinrichtung als auch die Bremsstaub-Sammeleinrichtung zu steuern. Alternativ kann die elektronische Steuerungseinrichtung beispielsweise auch einen ersten Mikrocontroller aufweisen, der dazu eingerichtet ist, die Bremsbetätigungseinrichtung zu steuern, und/oder einen zweiten Mikrocontroller aufweisen, der dazu eingerichtet ist, die Bremsstaub-Sammeleinrichtung zu steuern. Die elektronische Steuerungseinrichtung kann beispielsweise eine Platine aufweisen, welche den ersten und den zweiten Mikrocontroller trägt. Der erste und der zweite Mikrocontroller können zu einer Kommunikation miteinander eingerichtet sein.

Es ist beispielsweise auch möglich, dass die Bremsstaub-Sammeleinrichtung vom elektromechanischen Bremsaktuator mit elektrischer Energie versorgt wird und/oder abhängig von einem Zustand der Bremsbetätigungseinrichtung gesteuert wird.

Gemäß einem weiteren vorteilhaften Beispiel kann die Ansteuerung der Zuspannbewegung bzw. -kraft zugunsten einer Sammlung von Bremsstaub variiert werden. Der Begriff "Zuspannen" bezieht sich auf eine Kraftbeaufschlagung der Bremse, die auch mit einer Betätigung der Bremse einhergeht. Zuspannen der Bremse erfolgt normalerweise nur zum Zwecke der Verlangsamung des Fahrzeugs. Hier wird jedoch vorgeschlagen, die Bremse auch zu dem Zweck zu beaufschlagen und/oder zu bewegen, um die Sammlung von Bremsstaub zu begünstigen.

Gemäß einer Ausführungsform ist die elektronische Steuerungseinrichtung dazu eingerichtet, eine Sammelverbesserungsroutine für die Bremsstaub-Sammeleinrichtung durchzuführen. Die Sammelverbesserungsroutine umfasst, dass die Bremsbetätigungseinrichtung die Bremse dazu ansteuert, in der Bremse vorhandenen Bremsstaub abzuschütteln. Die Menge des aus der Bremse austretenden Bremsstaubes wird dabei gezielt erhöht. Dabei soll aber nicht zusätzlicher Bremsstaub erzeugt werden, sondern der ohnehin ständig entstehende Bremsstaub soll durch gezieltes Abschütteln aus der Bremse gelöst werden, insbesondere um dann mit einer gezielten Aktion der Bremsstaub-Sammeleinrichtung die gelöste Menge an Bremsstaub einzusammeln. Beispielsweise kann eine solche gezielte Aktion bedeuten, dass eine Saugeinrichtung der Bremsstaub-Sammeleinrichtung kurzzeitig verstärkt angesteuert wird. Dies kann im Ergebnis zu einer erhöhten Energieeffizienz des Gesamtsystems führen. Die Sammelverbesserungsroutine bildet grundsätzlich eine separate Routine zusätzlich zur normalen Bremsbetätigung.

Der vorstehende Aspekt ist auch unabhängig vom Gegenstand des Anspruchs 1 realisierbar. Ganz allgemein und unabhängig wird hiermit offenbart: ein Fahrzeug mit wenigstens einem elektromechanischen Bremsaktuator, wobei der elektromechanische Bremsaktuator eine Bremsbetätigungseinrichtung zum Betätigen einer Bremse umfasst, wobei die Bremsbetätigungseinrichtung ein Betätigungselement zum Beaufschlagen der Bremse und einen Elektromotor zum Antreiben des Betätigungselements umfasst, wobei der elektromechanische Bremsaktuator eine elektronische Steuerungseinrichtung umfasst, wobei die elektronische Steuerungseinrichtung dazu eingerichtet ist, die Bremsbetätigungseinrichtung zu steuern, wobei das Fahrzeug eine Bremsstaub-Sammeleinrichtung umfasst, wobei die elektronische Steuerungseinrichtung dazu eingerichtet ist, eine Sammelverbesserungsroutine für die Bremsstaub-Sammeleinrichtung durchzuführen, wobei Sammelverbesserungsroutine umfasst, dass die Bremsbetätigungseinrichtung die Bremse dazu ansteuert, in der Bremse vorhandenen Bremsstaub abzuschütteln.

Die Sammelverbesserungsroutine kann beispielsweise umfassen, dass die Bremse durch den Elektromotor zu einer Vibration angeregt wird. Alternativ oder zusätzlich kann die Sammelverbesserungsroutine beispielsweise umfassen, dass die Bremse impulsartig beaufschlagt wird. Alternativ oder zusätzlich kann die Sammelverbesserungsroutine umfassen, dass Bremsenteile aneinander geklopft werden. Ein Ziel der Sammelverbesserungsroutine ist es, möglichst viel vorhandenen Bremsstaub von der Bremse abzulösen. Diese große Menge an Bremsstaub kann dann beispielsweise gezielt von der Bremsstaub-Sammeleinrichtung gesammelt werden, beispielsweise eingesaugt werden.

Die elektronische Steuerungseinrichtung kann vorzugsweise dazu eingerichtet sein, die Sammelverbesserungsroutine während oder nach einem Betätigen der Bremse durchzuführen. Mit Betätigen der Bremse ist hiermit ein normales Bremsen zum Verlangsamen des Fahrzeugs gemeint.

Die elektronische Steuerungseinrichtung kann beispielsweise dazu eingerichtet sein, die Bremsstaub-Sammeleinrichtung zu einem Bremsstaub-Sammelvorgang, beispielsweise ein Einsaugen von Bremsstaub, anzusteuern und vorzugsweise den Bremsstaub-Sammelvorgang in Abhängigkeit von der Sammelverbesserungsroutine, etwa zumindest zeitweise gleichzeitig mit der Sammelverbesserungsroutine, durchzuführen.

Gemäß einer Ausführungsform umfasst der elektromechanische Bremsaktuator mechanische Komponenten der Bremsstaub-Sammeleinrichtung. Hierdurch lässt sich Bauraum einsparen und die Montage wird erleichtert. Durch eine gemeinsame Nutzung von mechanischen Komponenten durch die Bremsbetätigungseinrichtung und die Bremsstaub-Sammeleinrichtung kann zudem weiterer Bauraum gespart werden.

Gemäß einer Ausführungsform weist der elektromechanische Bremsaktautor ein Gehäuse auf, wobei die Bremsstaub-Sammeleinrichtung zumindest teilweise im Gehäuse angeordnet ist. Durch ein Gehäuse werden der Bremsaktuator sowie die Bremsstaub-Sammeleinrichtung vor äußeren Einflüssen geschützt. Durch ein gemeinsames Gehäuse sind der elektromechanische Bremsaktuator und die Bremsstaub-Sammeleinrichtung beieinander platziert, sodass eine kompakte Lösung erreicht und Bauraum gespart werden kann.

Allgemein kann durch eine Platzierung von Komponenten in einem gemeinsamen Gehäuse bei einer Wartung eine leichtere Erreichbarkeit der Komponenten realisiert werden, beispielsweise indem das Gehäuse einfach vom Fahrzeug demontiert werden kann und außerhalb des Fahrzeugs die Komponenten gewartet werden können.

Der Elektromotor der Bremsbetätigungseinrichtung kann vorzugsweise im Gehäuse angeordnet sein. Hierdurch lässt sich weiterer Bauraum vorteilhaft einsparen, wobei der Elektromotor vorteilhaft vor äußeren Einflüssen geschützt wird.

Die elektronische Steuerungseinrichtung kann vorzugsweise im Gehäuse angeordnet sein. Hierdurch lässt sich weiterer Bauraum vorteilhaft einsparen, wobei die elektronische Steuerungseinrichtung vorteilhaft vor äußeren Einflüssen geschützt wird.

Der elektromechanische Bremsaktuator kann grundsätzlich ein Getriebe zur Energieübertragung zwischen Elektromotor und Betätigungselement umfassen. Das Getriebe kann vorzugsweise im Gehäuse angeordnet sein. Hierdurch lässt sich weiterer Bauraum vorteilhaft einsparen, wobei das Getriebe vorteilhaft vor äußeren Einflüssen geschützt wird.

Die Bremsstaub-Sammeleinrichtung kann beispielsweise einen Kanal zum Transport von eingefangenem Bremsstaub umfassen. Durch einen Kanal bleibt der eingesammelte Bremsstaub in einem geschlossenen Volumen, sodass kein Bremsstaub auf dem Transportweg verloren geht. Der eingesammelte Bremsstaub kann somit zielgerichtet transportiert werden. Der Kanal kann vorzugsweise zumindest teilweise im Gehäuse angeordnet sein. Hierdurch lässt sich weiterer Bauraum vorteilhaft einsparen, wobei der Kanal vorteilhaft vor äußeren Einflüssen geschützt wird.

Die Bremsstaub-Sammeleinrichtung kann beispielsweise einen Bremsstaubspeicher für gesammelten Bremsstaub umfassen. Der Bremsstaubspeicher kann beispielsweise einen Filter und/oder einen Behälter umfassen. Der Bremsstaub kann durch den Kanal aus den Bremsen in den Bremsstaubspeicher der Bremsstaub-Sammeleinrichtung transportiert werden. In einem Bremsstaubspeicher kann der eingesammelte Bremsstaub für eine Entleerung gesammelt werden. So wird der Bremsstaub nicht in die Umwelt ausgestoßen, sondern kann bei einer Entleerung fachgerecht entsorgt werden. Der Bremsstaubspeicher kann vorzugsweise im Gehäuse angeordnet sein. Hierdurch lässt sich weiterer Bauraum vorteilhaft einsparen, wobei der Bremsstaubspeicher vorteilhaft vor äußeren Einflüssen geschützt wird.

Die Bremsstaub-Sammeleinrichtung kann beispielsweise einen Sensor aufweisen. Der Sensor kann zum Beispiel zur Unterstützung der Sammlungsfunktion und/oder einer Zustandsermittlung der Bremsstaub-Sammeleinrichtung eingerichtet sein. Der Sensor kann beispielsweise eine Menge an Bremsstaubemissionen erfassen. Beispielsweise kann der Sensor auch dazu eingerichtet sein, einen Füllstand eines Bremsstaubspeichers der Bremsstaub-Sammeleinrichtung zu ermitteln. Der Sensor kann vorzugsweise im Gehäuse angeordnet sein. Hierdurch lässt sich weiterer Bauraum vorteilhaft einsparen, wobei der Sensor vorteilhaft vor äußeren Einflüssen geschützt wird. Die Bremsstaub-Sammeleinrichtung kann beispielsweise auch mehrere Sensoren umfassen. Die mehreren Sensoren können im Gehäuse angeordnet sein.

Gemäß einer Ausführungsform weist die Bremsstaub-Sammeleinrichtung eine Saugeinrichtung auf. Durch die Saugeinrichtung kann das Sammeln von Bremsstaub aus der Bremse verbessert werden. Der in der Bremse entstandene Bremsstaub kann so in besonders effektiver Weise aus der Bremse entfernt und beispielsweise einem Bremsstaubspeicher zugeführt werden. Beispielsweise kann die Saugeinrichtung den Bremsstaub durch Erzeugung von Unterdruck aus der Bremse saugen. Vorzugsweise kann die Saugeinrichtung zumindest teilweise im Gehäuse angeordnet sein. Hierdurch lässt sich weiterer Bauraum vorteilhaft einsparen, wobei die Saugeinrichtung vorteilhaft vor äußeren Einflüssen geschützt wird.

Die Bremsstaub-Sammeleinrichtung kann vorzugsweise eine Kupplung zwischen dem Elektromotor und der Saugeinrichtung zum Antreiben der Saugeinrichtung umfassen. Die Saugeinrichtung kann durch die Kupplung mit dem Elektromotor betrieben werden, sodass weitere Elemente zum Antreiben der Saugeinrichtung vorteilhaft eingespart werden können. Die Kupplung kann vorzugsweise im Gehäuse angeordnet sein. Hierdurch lässt sich weiterer Bauraum vorteilhaft einsparen, wobei die Kupplung vorteilhaft vor äußeren Einflüssen geschützt wird.

Die Bremsstaub-Sammeleinrichtung kann beispielsweise einen zweiten Elektromotor zum Antreiben der Saugeinrichtung umfassen. So kann auf einfache Weise erreicht werden, dass die Bremsstaub-Sammeleinrichtung nicht vom Antrieb bzw. Elektromotor der Bremsbetätigungseinrichtung abhängig ist. Der zweite Elektromotor kann vorzugsweise im Gehäuse angeordnet sein. Hierdurch lässt sich weiterer Bauraum vorteilhaft einsparen, wobei der zweite Elektromotor vorteilhaft vor äußeren Einflüssen geschützt wird.

Gemäß einer Ausführungsform weist der elektromechanische Bremsaktuator einen gemeinsamen Antrieb für die Bremsbetätigungseinrichtung und für die Bremsstaub-Sammeleinrichtung auf. Dies stellt eine weitere vorteilhafte Funktionsintegration dar und spart Bauraum.

Beispielsweise kann eine gemeinsame Nutzung von Anteilen im mechanischen, elektro-mechanischen oder elektronischen Antriebsstrang des elektromechanischen Bremsaktuators sowohl für das Antreiben der Bremsbetätigungseinrichtung als auch für das Antreiben der Bremsstaub-Sammeleinrichtung vorgesehen sein. Der gemeinsame Antrieb kann beispielsweise wenigstens einen Teil des Elektromotors umfassen. Der gemeinsame Antrieb kann beispielsweise eine gemeinsame Spulenwicklung, einen gemeinsamen magnetischen Kern und/oder einen gemeinsamen Kommutator oder ähnliches umfassen. Der gemeinsame Antrieb kann zu einer gemeinsamen Nutzung der Energie aus einem magnetischen und/oder elektromagnetischen Feldes eingerichtet sein. Der gemeinsame Antrieb kann wenigstens eine gemeinsam wirksame Welle, Getriebestufe oder Verriegelungseinrichtung umfassen.

Gemäß einer Ausführungsform weist der elektromechanische Bremsaktuator eine gemeinsame Energieversorgung für die Bremsbetätigungseinrichtung und für die Bremsstaub-Sammeleinrichtung auf. Die dabei gemeinsam genutzte Energie kann beispielsweise aus einem magnetischen und/oder elektromagnetischen Feld eingerichtet sein. Durch eine gemeinsame Energieversorgung können weitere Elemente zum Betreiben der Bremsbetätigungseinrichtung und der Bremsstaub-Sammeleinrichtung vorteilhaft eingespart werden.

Gemäß einer Ausführungsform ist der elektromechanische Bremsaktuator dazu eingerichtet, eine beim Betätigen der Bremse in diese eingebrachte Energie und/oder beim Entspannen der Bremse freiwerdende Energie dazu zu verwenden, die Bremsstaub-Sammeleinrichtung anzutreiben und/oder anzusteuern. Durch die Nutzung der Energie beim Betätigen der Bremse für die Bremsstaub-Sammeleinrichtung kann die Energie besonders effizient genutzt werden. Dadurch kann die Bremsstaub-Sammeleinrichtung besonders energieeffizient angetrieben und/oder angesteuert werden und es können Energiekosten gespart werden.

Die Aufgabe wird auch gelöst durch ein elektromechanisches Bremssystem nach dem hierauf gerichteten Anspruch. Das elektromechanische Bremssystem umfasst wenigstens eine Bremse und wenigstens einen der Bremse zugeordneten elektromechanischen Bremsaktuator vorstehend beschriebener Art.

Die Aufgabe wird auch gelöst durch ein Fahrzeug nach dem hierauf gerichteten Anspruch. Das Fahrzeug umfasst ein elektromechanisches Bremssystem vorstehend beschriebener Art.

Das Fahrzeug kann beispielsweise ein Nutzfahrzeug, ein Lastkraftwagen (LKW), ein Personenkraftwagen (PKW) oder ein Omnibus sein.

Das Fahrzeug kann beispielsweise ein Straßenfahrzeug oder ein Schienenfahrzeug sein.

Das Fahrzeug kann beispielsweise ein Einzelfahrzeug, eine Zugmaschine oder ein Anhänger für eine Zugmaschinen-Anhänger-Kombination oder eine Zugmaschinen-Anhänger-Kombination sein.

Die Aufgabe wird auch gelöst durch ein Verfahren nach dem hierauf gerichteten Anspruch zum Sammeln von Bremsstaub in einem Fahrzeug. Das Fahrzeug umfasst dabei eine Bremse und einen elektromechanischen Bremsaktuator nach vorstehend beschriebener Art für die Bremse. Mittels der Bremsstaub-Sammeleinrichtung wird Bremsstaub aus der Bremse gesammelt.

Falls hierin Vorrichtungen und Verfahren beschrieben sind, können die beschriebenen Verfahren vorteilhaft durch die Ausführungsformen und Einzelmerkmale der Vorrichtungen sinngemäß weitergebildet werden und umgekehrt.

Die Erfindung wird nachfolgend anhand von Beispielen erläutert, die in schematischen Zeichnungen gezeigt sind.
Fig. 1 zeigt ein Fahrzeug.
Fig. 2 zeigt einen elektromechanischen Bremsaktuator.
Fig. 3 zeigt einen elektromechanischen Bremsaktuator.
Fig. 4 zeigt einen elektromechanischen Bremsaktuator.
Fig. 5 zeigt einen elektromechanischen Bremsaktuator.
Fig. 6 zeigt einen elektromechanischen Bremsaktuator.
Fig. 7 zeigt einen elektromechanischen Bremsaktuator.
Fig. 8 zeigt ein Verfahren zum Sammeln von Bremsstaub in einem Fahrzeug.

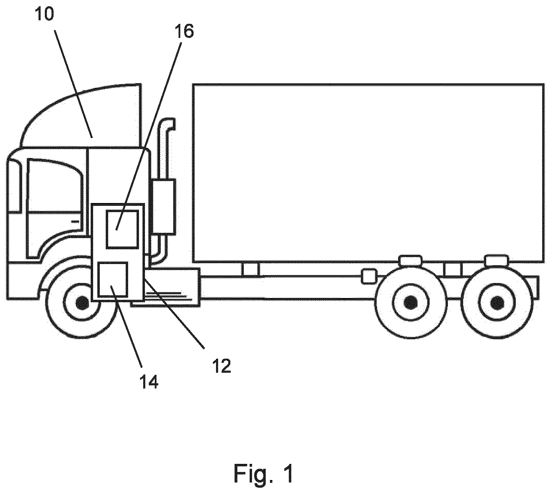

Fig. 1 zeigt ein Fahrzeug 10, welches ein elektromechanisches Bremssystem 12 umfasst. Das elektromagnetische Bremssystem 12 umfasst wenigstens eine Bremse 14 und wenigstens einen der Bremse 14 zugeordneten elektromechanischen Bremsaktuator 16.

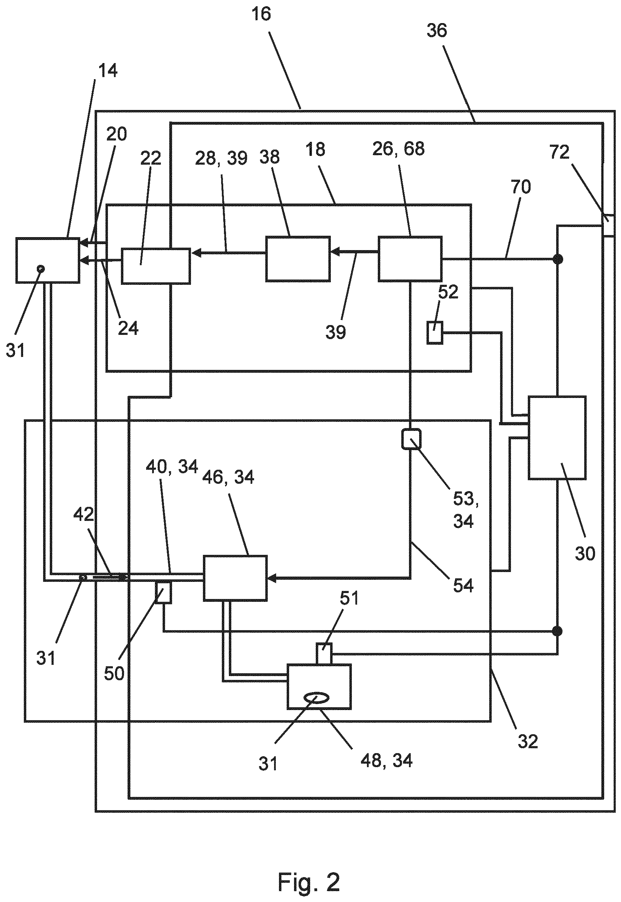

Fig. 2 zeigt einen elektromechanischen Bremsaktuator 16 für ein Fahrzeug, beispielsweise für das Fahrzeug 10 in Fig. 1. Der elektromechanische Bremsaktuator 16 umfasst eine Bremsbetätigungseinrichtung 18 zum Betätigen 20 einer Bremse 14. Die Bremsbetätigungseinrichtung 18 umfasst ein Betätigungselement 22 zum Beaufschlagen 24 der Bremse 14 und einen Elektromotor 26 zum Antreiben 28 des Betätigungselements 22.

Der elektromechanische Bremsaktuator 16 umfasst eine elektronische Steuerungseinrichtung 30. Die elektronische Steuerungseinrichtung 30 ist dazu eingerichtet, die Bremsbetätigungseinrichtung 18 zu steuern.

Beim Betätigen 20 der Bremse 14 zur Verlangsamung des Fahrzeugs entsteht in der Bremse 14 Bremsstaub 31 aufgrund von Abrieb zwischen den aneinanderreibenden Oberflächen, etwa im Fall einer Scheibenbremse zwischen Bremsbelägen und einer Bremsscheibe.

Der elektromechanische Bremsaktuator 16 umfasst eine Bremsstaub-Sammeleinrichtung 32. Die elektronische Steuerungseinrichtung 30 ist dazu eingerichtet, die Bremsstaub-Sammeleinrichtung 32 zu steuern.

Der elektromechanische Bremsaktuator 16 umfasst im Beispiel von Fig. 2 mehrere mechanische Komponenten 34 der Bremsstaub-Sammeleinrichtung 32. Der elektromechanische Bremsaktuator 16 weist ein Gehäuse 36 auf. Die Bremsstaub-Sammeleinrichtung 32 ist zumindest teilweise im Gehäuse 36 angeordnet. Mehrere mechanische Komponenten 34 der Bremsstaub-Sammeleinrichtung 32 befindet sich in diesem Beispiel im Gehäuse 36.

Der Elektromotor 26 des elektromechanischen Bremsaktuators 16 ist im Gehäuse 36 angeordnet. Die elektronische Steuerungseinrichtung 30 ist im Gehäuse 36 angeordnet.

Der elektromechanische Bremsaktuator 16 umfasst ein Getriebe 38 zur Energieübertragung 39 zwischen dem Elektromotor 26 und dem Betätigungselement 22. Das Getriebe 38 ist im Gehäuse 36 angeordnet.

Die Bremsstaub-Sammeleinrichtung 32 des elektromechanischen Bremsaktuators 16 umfasst einen Kanal 40 zum Transport 42 von eingefangenem Bremsstaub 31. Der Kanal 40 ist zumindest teilweise im Gehäuse 36 angeordnet. Durch den Kanal 40 bleibt der eingesammelte Bremsstaub 31 in einem geschlossenen Volumen, sodass kein Bremsstaub 31 auf dem Transportweg verloren geht. Der eingesammelte Bremsstaub 31 kann somit zielgerichtet transportiert werden.

Die Bremsstaub-Sammeleinrichtung 32 weist eine Saugeinrichtung 46 auf. Die Saugeinrichtung 46 ist im Gehäuse 36 angeordnet. Durch die Saugeinrichtung 46 kann Bremsstaub 31 aktiv eingesaugt werden. Der in der Bremse 14 entstandene Bremsstaub 31 kann so in besonders einfacher Weise aus der Bremse 14 entfernt und einem Bremsstaubspeicher 48 zugeführt werden, in dem der Bremsstaub 31 gesammelt werden kann.

Die Bremsstaub-Sammeleinrichtung 32 umfasst den Bremsstaubspeicher 48 für gesammelten Bremsstaub 31. Der Bremsstaubspeicher 48 ist im Gehäuse 36 angeordnet. Der Bremsstaub 31 wird durch den Kanal 40 aus der Bremse 14 in den Bremsstaubspeicher 48 der Bremsstaub-Sammeleinrichtung 32 transportiert. Im Bremsstaubspeicher 48 wird der eingesammelte Bremsstaub 31 gesammelt und zu einem späteren Zeitpunkt, beispielsweise bei einer Wartung des Fahrzeugs, entfernt.

Die Bremsstaub-Sammeleinrichtung 32 umfasst beispielhaft einen ersten Sensor 50. Der erste Sensor 50 ist im Gehäuse 36 angeordnet. Der erste Sensor 50 ist beispielhaft dazu eingerichtet, eine Menge an Bremsstaub 42, welche von der Bremse 14 aufgenommen wird, zu erfassen. Der erste Sensor 50 ist mit der elektronischen Steuerungseinrichtung 30 verbunden und kommuniziert die Menge an aufgenommenem Bremsstaub 42 an die elektronische Steuerungseinrichtung 30.

Die Bremsstaub-Sammeleinrichtung 32 umfasst beispielhaft einen zweiten Sensor 51. Der zweite Sensor 51 ist im Gehäuse 36 angeordnet. Der zweite Sensor 51 ist beispielhaft dazu eingerichtet, einen Füllstand des Bremsstaubspeichers 48 der Bremsstaub-Sammeleinrichtung 32 zu ermitteln.

Die Bremsbetätigungseinrichtung 18 umfasst beispielhaft einen Sensor 52. Der Sensor 52 wird hier als dritter Sensor 52 bezeichnet. Der dritte Sensor 52 kann beispielsweise dazu eingerichtet sein, eine Position des Betätigungselements 22 zu erfassen. Der dritte Sensor 52 kann beispielsweise dazu eingerichtet sein, eine Temperatur des Elektromotors 26 oder der Bremse 14 zu erfassen. Es können auch mehrere derartige Sensoren vorgesehen sein. Der dritte Sensor 52 ist in diesem Beispiel im Gehäuse 36 angeordnet.

Die Bremsstaub-Sammeleinrichtung 32 umfasst im Beispiel von Fig. 2 eine Kupplung 53 zwischen dem Elektromotor 26 und der Saugeinrichtung 46 zum Betreiben 54 der Saugeinrichtung 46. Die Kupplung 53 ist im Gehäuse 36 angeordnet.

Der elektromechanische Bremsaktuator 16 weist einen gemeinsamen Antrieb 68 für die Bremsbetätigungseinrichtung 18 und die Bremsstaub-Sammeleinrichtung 32 auf. Der gemeinsame Antrieb 68 umfasst in diesem Beispiel den Elektromotor 26 oder einen Teil des Elektromotors 26. Der Elektromotor 26 bzw. ein Teil des Elektromotors 26 ist als ein Antrieb sowohl für die Bremsbetätigungseinrichtung 18 als auch für die Bremsstaub-Sammeleinrichtung 32 eingerichtet. Die Kupplung 53 ist vorzugsweise dazu eingerichtet, Antriebsmoment zum Antreiben 54 der Saugeinrichtung 46 vom Elektromotor 26 abzunehmen und an die Saugeinrichtung 46 zu übertragen. Die Kupplung 53 kann beispielsweise schaltbar sein.

Der gemeinsame Antrieb 68 kann beispielsweise eine gemeinsame Spulenwicklung, einen gemeinsamen magnetischen Kern und/oder einen gemeinsamen Kommutator oder ähnliches umfassen. Die gemeinsame Spulenwicklung, der gemeinsame magnetische Kern und/oder der gemeinsame Kommutator können beispielsweise Teil des Elektromotors 26 sein. Der gemeinsame Antrieb 68 kann zu einer gemeinsamen Nutzung der Energie aus einem magnetischen bzw. elektromagnetischen Feldes, beispielsweise eines Feldes im Elektromotor 26, eingerichtet sein. Der gemeinsame Antrieb 68 kann beispielsweise wenigstens eine gemeinsam wirksame Welle, Getriebestufe oder Verriegelungseinrichtung, insbesondere einer Parkbremseinrichtung, umfassen, die Teil des Elektromotors 26 sein können.

Der elektromechanische Bremsaktuator 16 weist eine gemeinsame Energieversorgung 70 für die Bremsbetätigungseinrichtung 18 und für die Bremsstaub-Sammeleinrichtung 32 auf. In diesem Beispiel speist die gemeinsame Energieversorgung 70 den gemeinsamen Antrieb 68. Die gemeinsame Energieversorgung 70 kann beispielsweise einen elektrischen Anschluss 72 umfassen. Über den Anschluss 66 kann der elektromechanische Bremsaktuator 16 beispielsweise an eine zentrale elektrische Energieversorgung des Fahrzeugs angeschlossen werden.

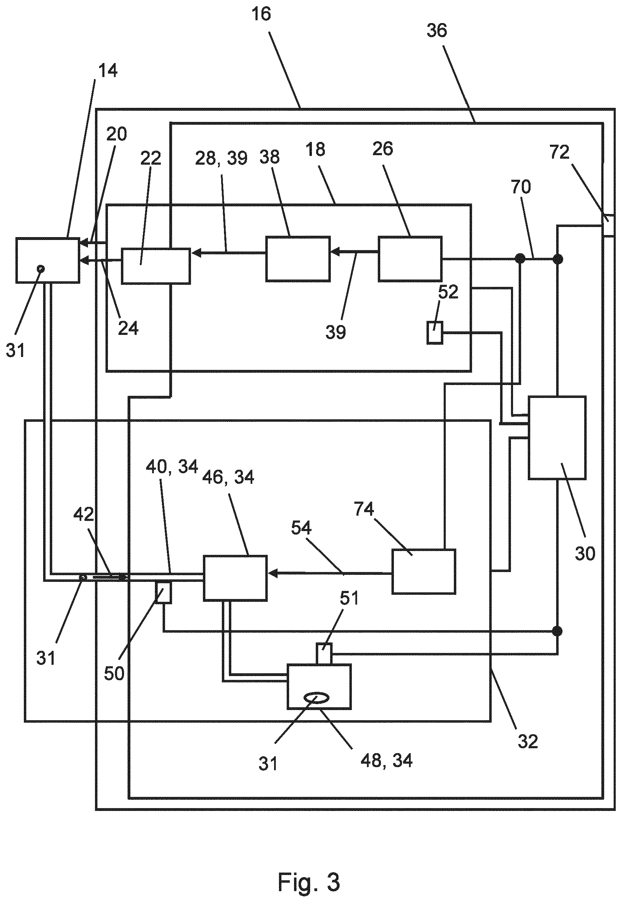

Fig. 3 zeigt einen elektromechanischen Bremsaktuator 16, der grundsätzlich ähnlich aufgebaut ist, wie derjenige der Fig. 2. Die Bremsstaub-Sammeleinrichtung 32 weist in diesem Beispiel einen Elektromotor 74 auf, der hier als zweiter Elektromotor 74 bezeichnet wird. Der zweite Elektromotor 74 ist zum Antreiben 54 der Saugeinrichtung 46 eingerichtet. Der Elektromotor 26 beziehungsweise die Bremsbetätigungseinrichtung 18 und der zweite Elektromotor 74 beziehungsweise die Bremsstaub-Sammeleinrichtung 32 weisen eine gemeinsame Energieversorgung 70 auf.

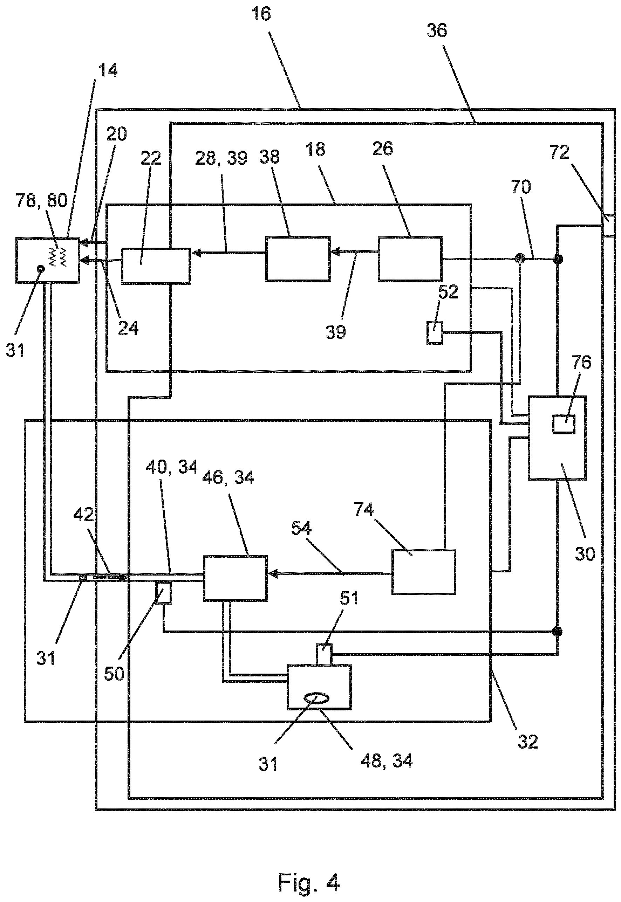

Fig. 4 zeigt einen elektromechanischen Bremsaktuator 16, der grundsätzlich ähnlich aufgebaut ist, wie derjenige der Fig. 3, wobei die nachfolgend beschriebenen Merkmale beispielsweise auch in einem elektromechanischen Bremsaktuator 16 gemäß Fig. 2 realisiert sein können. Die elektronische Steuerungseinrichtung 30 des elektromechanischen Bremsaktuators 16 der Fig. 4 ist dazu eingerichtet, eine Sammelverbesserungsroutine 76 für die Bremsstaub-Sammeleinrichtung 32 durchzuführen, wobei die Sammelverbesserungsroutine 76 umfasst, dass die Bremsbetätigungseinrichtung 18 die Bremse 14 dazu ansteuert, in der Bremse 14 vorhandenen Bremsstaub 31 abzuschütteln 78. Das Abschütteln 78 ist in Fig. 4 durch Zickzacklinien angedeutet. Beispielsweise kann die Sammelverbesserungsroutine 76 umfassen, dass die Bremse 14 durch den Elektromotor 26 zu einer Vibration 80 angeregt wird.

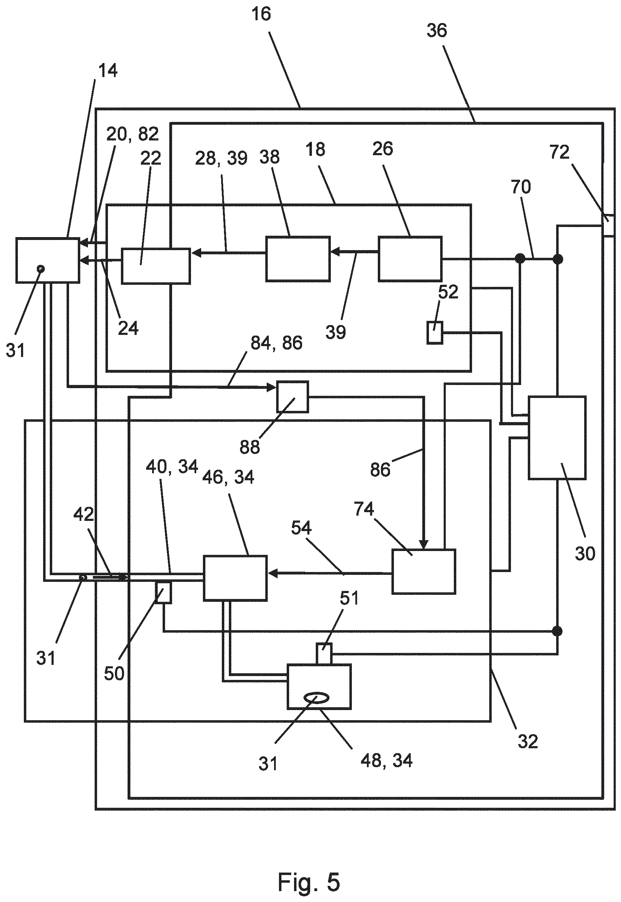

Fig. 5 zeigt einen elektromechanischen Bremsaktuator 16, der grundsätzlich ähnlich aufgebaut ist, wie derjenige der Fig. 3, wobei die nachfolgend beschriebenen Merkmale beispielsweise auch in einem elektromechanischen Bremsaktuator 16 gemäß Fig. 2 oder 4 realisiert sein können. Der elektromechanische Bremsaktuator 16 der Fig. 5 ist dazu eingerichtet, eine beim Betätigen 20 der Bremse 14 in diese eingebrachte Energie 82 und/oder beim Entspannen 84 der Bremse 14 freiwerdende Energie 86 dazu zu verwenden, die Bremsstaub-Sammeleinrichtung 32 anzutreiben und/oder anzusteuern, vorzugsweise um die Saugeinrichtung 46 anzutreiben 54. Der elektromechanische Bremsaktuator 16 weist zu diesem Zweck eine Energieumsetzungseinrichtung 88 auf. Die Energieumsetzungseinrichtung 88 ist in diesem Beispiel im Gehäuse 36 angeordnet. Eine zusätzliche Energieversorgung des zweiten Elektromotors 74, etwa über die gemeinsame Energieversorgung 70, wie in Fig. 5 dargestellt, ist optional. Wenn die hier beschriebene Energieumsetzungseinrichtung 88 im Beispiel gemäß Fig. 2 eingesetzt werden soll, kann die Energie 86 beispielsweise zum Antreiben des Elektromotors 26 des gemeinsamen Antriebs 68 verwendet werden. Es kann grundsätzlich eine Leerlaufstufe im Getriebe 38 in Fig. 2 bevorzugt vorgesehen sein, um den gemeinsamen Elektromotor 26 unabhängig zum Betätigen der Bremse 20 oder Antreiben 54 der Saugeinrichtung 46 zu verwenden.

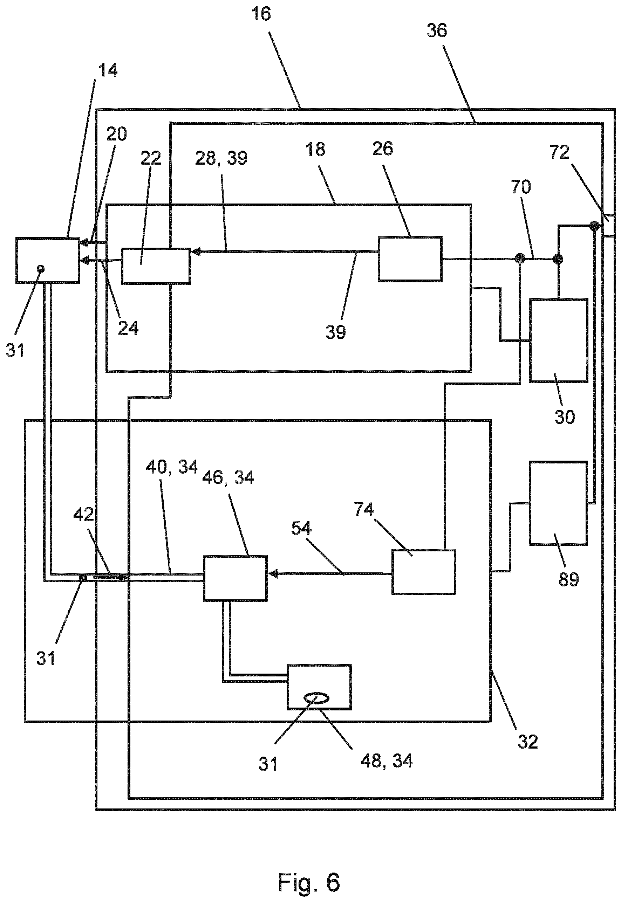

Fig. 6 zeigt einen elektromechanischen Bremsaktuator 16, der grundsätzlich ähnlich aufgebaut ist, wie derjenige der Fig. 3, wobei die nachfolgend beschriebenen Merkmale beispielsweise auch in einem elektromechanischen Bremsaktuator 16 gemäß Fig. 2, 4 oder 5 realisiert sein können. Der elektromechanische Bremsaktuator 16 der Fig. 6 umfasst eine elektronische Steuerungseinrichtung 30, die dazu eingerichtet ist, die Bremsbetätigungseinrichtung 18 zu steuern. Der elektromechanische Bremsaktuator 16 der Fig. 6 umfasst eine zweite elektronische Steuerungseinrichtung 89, die dazu eingerichtet ist, die Bremsstaub-Sammeleinrichtung 32 zu steuern.

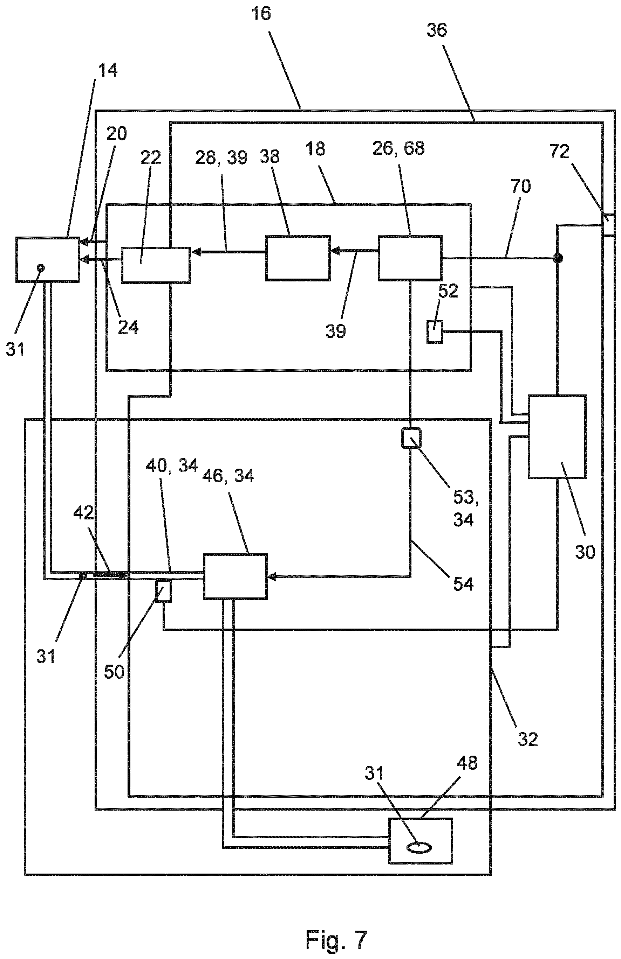

Fig. 7 zeigt einen elektromechanischen Bremsaktuator 16, der grundsätzlich ähnlich aufgebaut ist, wie derjenige der Fig. 2, wobei die nachfolgend beschriebenen Merkmale beispielsweise auch in einem elektromechanischen Bremsaktuator 16 gemäß Fig. 2, 4, 5 oder 6 realisiert sein können. Konkret zeigt Fig. 7 ein Beispiel, bei dem der Bremsstaubspeicher 48 außerhalb der Gehäuses 36 angeordnet ist und nicht Teil des elektromechanischen Bremsaktuators 16 ist.

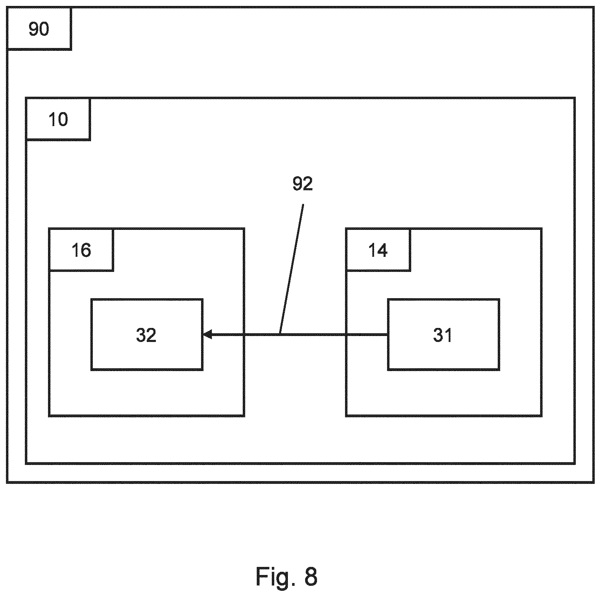

Fig. 8 zeigt ein Verfahren 90 zum Sammeln 92 von Bremsstaub 31 in einem Fahrzeug 10, wobei das Fahrzeug 10 eine Bremse 14 und einen elektromechanischen Bremsaktuator 16 umfasst. Der elektromechanische Bremsaktuator 16 ist beispielsweise gemäß Fig. 2, 3, 4 oder 5 ausgeführt und umfasst eine Bremsstaub-Sammeleinrichtung 32 zumindest teilweise. Bei dem Verfahren 90 wird mittels der Bremsstaub-Sammeleinrichtung 32 Bremsstaub 31 aus der Bremse 14 gesammelt 92.

Soweit ähnliche oder gleiche Elemente in unterschiedlichen Figuren gezeigt sind, sind Bezugszeichen entsprechend vergeben. Eine mehrfache Beschreibung ähnlicher oder gleicher Elemente wurde zwecks Übersichtlichkeit vermieden. Gleichwohl können die Ausführungsformen der Figuren untereinander kombiniert und entsprechend zu den anderen Ausführungsformen sowie durch deren Einzelmerkmale weitergebildet werden.

### Bezugszeichen (Teil der Beschreibung)

- 10: Fahrzeug
- 12: elektromechanisches Bremssystem
- 14: Bremse
- 16: elektromechanischer Bremsaktuator
- 18: Bremsbetätigungseinrichtung
- 20: Betätigen
- 22: Betätigungselement
- 24: Beaufschlagen
- 26: Elektromotor
- 28: Antreiben
- 30: elektronische Steuerungseinrichtung
- 31: Bremsstaub
- 32: Bremsstaub-Sammeleinrichtung
- 34: mechanische Komponente
- 36: Gehäuse
- 38: Getriebe
- 39: Energieübertragung
- 40: Kanal
- 42: Transport
- 46: Saugeinrichtung
- 48: Bremsstaubspeicher
- 50: Sensor
- 51: Sensor
- 52: Sensor
- 53: Kupplung
- 54: Antreiben
- 68: gemeinsamer Antrieb
- 70: gemeinsame Energieversorgung
- 72: elektrischer Anschluss
- 74: zweiter Elektromotor
- 76: Sammelverbesserungsroutine
- 78: Abschütteln
- 80: Vibration
- 82: Energie
- 84: Entspannen
- 86: Energie
- 88: Energieumsetzungseinrichtung
- 89: zweite elektronische Steuerungseinrichtung
- 90: Verfahren
- 92: Sammeln

## Patentansprüche

1. Elektromechanischer Bremsaktuator (16) für ein Fahrzeug (10),
wobei der elektromechanische Bremsaktuator (16) eine Bremsbetätigungseinrichtung (18) zum Betätigen (20) einer Bremse (14) umfasst,
wobei die Bremsbetätigungseinrichtung (18) ein Betätigungselement (22) zum Beaufschlagen (24) der Bremse (14) und einen Elektromotor (26) zum Antreiben (28) des Betätigungselements (22) umfasst,
wobei der elektromechanische Bremsaktuator (16) eine elektronische Steuerungseinrichtung (30) umfasst,
wobei die elektronische Steuerungseinrichtung (30) dazu eingerichtet ist, die Bremsbetätigungseinrichtung (18) zu steuern,
**dadurch gekennzeichnet,**
**dass** der elektromechanische Bremsaktuator (16) eine Bremsstaub-Sammeleinrichtung (32) zumindest teilweise umfasst.

2. Elektromechanischer Bremsaktuator (16) nach Anspruch 1,
wobei die elektronische Steuerungseinrichtung (30) dazu eingerichtet ist, die Bremsstaub-Sammeleinrichtung (32) zu steuern.

3. Elektromechanischer Bremsaktuator (16) nach einem der vorstehenden Ansprüche,
wobei die elektronische Steuerungseinrichtung (30) dazu eingerichtet ist,
eine Sammelverbesserungsroutine (76) für die Bremsstaub-Sammeleinrichtung (32) durchzuführen,
wobei die Sammelverbesserungsroutine (76) umfasst, dass die Bremsbetätigungseinrichtung (32) die Bremse (14) dazu ansteuert, in der Bremse (14) vorhandenen Bremsstaub (31) abzuschütteln (78).

4. Elektromechanischer Bremsaktuator (16) nach einem der vorstehenden Ansprüche,
wobei der elektromechanische Bremsaktuator (16) mechanische Komponenten (34) der Bremsstaub-Sammeleinrichtung (32) umfasst.

5. Elektromechanischer Bremsaktuator (16) nach einem der vorstehenden Ansprüche,
wobei der elektromechanische Bremsaktautor (16) ein Gehäuse (36) aufweist, vorzugsweise wobei die Bremsstaub-Sammeleinrichtung (32) zumindest teilweise im Gehäuse (36) angeordnet ist.

6. Elektromechanischer Bremsaktuator (16) nach Anspruch 5,
wobei der Elektromotor (26) im Gehäuse (36) angeordnet ist und/oder
wobei die elektronische Steuerungseinrichtung (30) im Gehäuse (36) angeordnet ist und/oder
wobei der elektromechanische Bremsaktuator (16) ein Getriebe (38) zur Energieübertragung (39) zwischen dem Elektromotor (26) und dem Betätigungselement (22) umfasst, wobei das Getriebe (38) im Gehäuse (36) angeordnet ist.

7. Elektromechanischer Bremsaktuator (16) nach Anspruch 5 oder 6,
wobei die Bremsstaub-Sammeleinrichtung (32) einen Kanal (40) zum Transport (42) von eingefangenem Bremsstaub (31) umfasst, wobei der Kanal (40) zumindest teilweise im Gehäuse (36) angeordnet ist und/oder
wobei die Bremsstaub-Sammeleinrichtung (32) einen Bremsstaubspeicher (48) für gesammelten Bremsstaub (31) umfasst, wobei der Bremsstaubspeicher (48) im Gehäuse (36) angeordnet ist und/oder
wobei die Bremsstaub-Sammeleinrichtung (32) einen Sensor (50, 51) aufweist, wobei der Sensor (50, 51) im Gehäuse (36) angeordnet ist.

8. Elektromechanischer Bremsaktuator (16) nach einem der Ansprüche 5 bis 7,
wobei die Bremsstaub-Sammeleinrichtung (32) eine Saugeinrichtung (46) aufweist, vorzugsweise wobei die Saugeinrichtung (46) zumindest teilweise im Gehäuse (36) angeordnet ist, und/oder
vorzugsweise wobei die Bremsstaub-Sammeleinrichtung (32) eine Kupplung (53) zwischen dem Elektromotor (26) und der Saugeinrichtung (46) zum Antreiben (54) der Saugeinrichtung (46) umfasst, vorzugsweise wobei die Kupplung (53) im Gehäuse (36) angeordnet ist, und/oder
vorzugsweise wobei die Bremsstaub-Sammeleinrichtung (32) einen zweiten Elektromotor (74) zum Antreiben (54) der Saugeinrichtung (46) umfasst, wobei der zweite Elektromotor (74) im Gehäuse (36) angeordnet ist.

9. Elektromechanischer Bremsaktuator (16) nach einem der vorstehenden Ansprüche,
wobei der elektromechanische Bremsaktuator (16) einen gemeinsamen Antrieb (68) für die Bremsbetätigungseinrichtung (18) und für die Bremsstaub-Sammeleinrichtung (32) aufweist.

10. Elektromechanischer Bremsaktuator (16) nach einem der vorstehenden Ansprüche,
wobei der elektromechanische Bremsaktuator (16) eine gemeinsame Energieversorgung (70) für die Bremsbetätigungseinrichtung (18) und für die Bremsstaub-Sammeleinrichtung (32) aufweist.

11. Elektromechanischer Bremsaktuator (16) nach einem der vorstehenden Ansprüche,
wobei der elektromechanische Bremsaktuator (16) dazu eingerichtet ist, eine beim Betätigen (20) der Bremse (14) in diese eingebrachte Energie (82) und/oder beim Entspannen (84) der Bremse (14) freiwerdende Energie (86) dazu zu verwenden, die Bremsstaub-Sammeleinrichtung (32) anzutreiben und/oder anzusteuern.

12. Elektromechanisches Bremssystem (12) umfassend
wenigstens eine Bremse (14) und wenigstens einen der Bremse (14) zugeordneten elektromechanischen Bremsaktuator (16) nach einem der vorstehenden Ansprüche.

13. Fahrzeug (10) umfassend
ein elektromechanisches Bremssystem (12) nach Anspruch 12.

14. Verfahren (90) zum Sammeln (92) von Bremsstaub (31) in einem Fahrzeug (10), wobei das Fahrzeug (10) eine Bremse (14) und einen elektromechanischen Bremsaktuator (16) nach einem der vorstehenden Ansprüche für die Bremse (14) umfasst, wobei mittels der Bremsstaub-Sammeleinrichtung (32) Bremsstaub (31) aus der Bremse (14) gesammelt wird.
